# EUROPEAN PATENT SPECIFICATION

(11) **EP 0 698 340 B1**
(45) Date of publication and mention of the grant of the patent: **10.05.2000**
(21) Application number: 95202251.5
(22) Date of filing: 21.08.1995
(51) Int. Cl.: A01J 5/017

(54) **An implement for automatically milking animals**
Gerät zum automatischen Melken von Tieren
Dispositif de traite automatique d'animaux

(30) Priority: 25.08.1994 NL 9401374
(43) Date of publication of application: 28.02.1996
(73) Proprietor: MAASLAND N.V., 3155 PD Maasland (NL)
(72) Inventor: Van der Ent, Willem Arie, NL-3176 PN Poortugaal (NL)
(74) Representative: Corten, Maurice Jean F.M.

(56) References cited:
- EP-A- 0 553 940
- EP-A- 0 555 895
- EP-A- 0 576 086
- US-A- 4 685 422

## Description

The present invention relates to an implement for automatically milking animals, such as cows, using a milking robot comprising a robot arm for automatically connecting teat cups to the teats of the animal to be milked.

Such implements, such as disclosed in e.g. US-A- 4 685 422, are well-known.

With a milking robot of the above-mentioned type, the robot arm is mostly disposed in the vicinity of a milking/feeding parlour and is used for connecting the teat cups to the teats of the animal to be milked. For this purpose, the robot arm should be put underneath the animal. Besides, the distance between the teats and the floor of the milking/feeding parlour is mostly short (about half a metre). Due to the short distance between the teats and the floor, the robot arm itself is also relatively close to the floor. When work for maintenance or repair to the robot arm is to be done, various parts of the robot arm are difficult to reach due to the low position of the robot arm.

The invention has for its objective to provide an implement of the above type, which implement enables not very well accessible parts of the robot arm to be reached in a simple manner.

According to the invention, this is achieved in that the robot arm is provided with a hinge construction, by means of which at least a part of the robot arm can be swung upwards, which part can be locked in the upwardly directed position through locking means. The underside of the milking robot, too, is thus well accessible for a maintenance engineer. According to a further feature of the invention, the hinge construction is provided with a locking device, by means of which the swivelling part of the robot arm can be locked in an operating position, while further the swivelling part can be kept in at least one upwardly directed position. According to still another feature of the invention, the locking device comprises a screwed connection.

Because especially the part bearing the teat cups on the robot arm comprises many devices, according to a further feature of the invention, the robot arm part bearing the teat cups is capable of being swung into an upwardly directed position. To achieve that the maintenance engineer has both his hands free for his work, according to a feature of the invention, the swivelling part of the robot arm being in an upwardly directed position bears against a stop provided on the other part of the robot arm. To prevent that the swivelling part of the robot arm falls back into its original position due to gravitation, according to a further aspect of the invention, the swivelling part of the robot arm is capable of being swung through an angle of more than 90°, preferably 95°, to the horizontal. According to a further feature of the invention, the swivelling part of the robot arm is capable of rotating about a horizontal shaft.

According to a still another feature of the invention, the swivelling part of the robot arm is L-shaped.

The invention will now be further explained with reference to the accompanying drawings, in which:
Figure 1 shows a plan view of an implement for automatically milking animals such as cows, using a milking robot comprising a robot arm;
Figure 2 shows an enlargement of the robot arm represented in Figure 1, and
Figure 3 shows an enlargement of a detail of the hinge construction of the robot arm depicted in Figure 2.

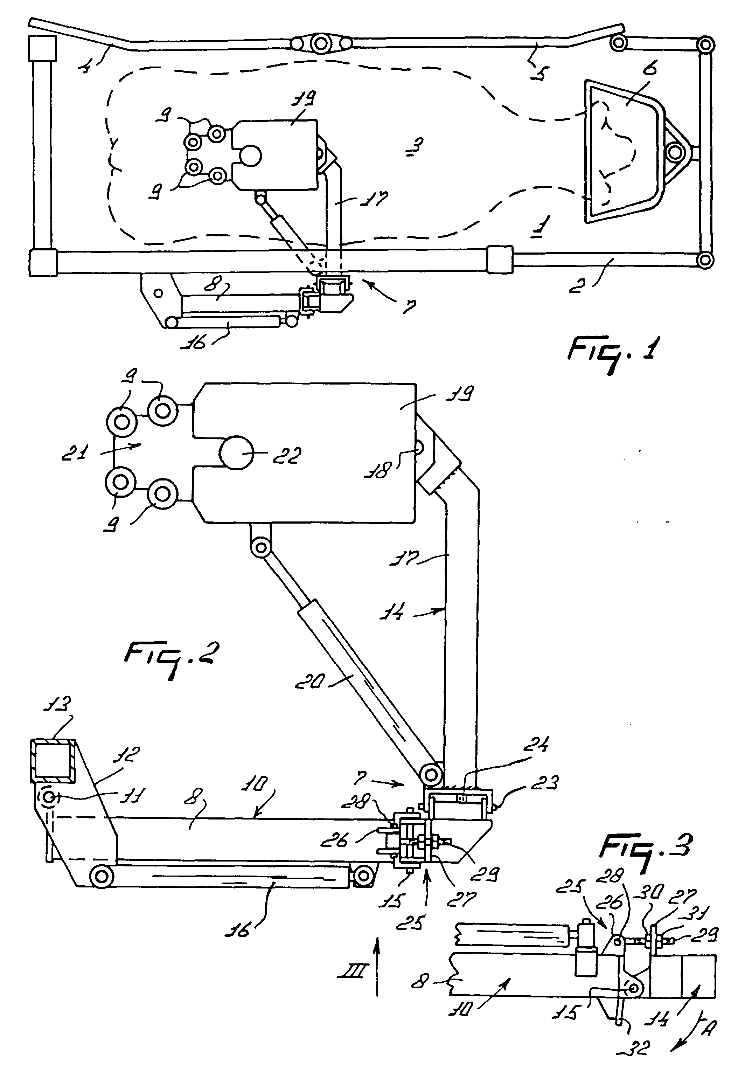

Figure 1, a plan view, shows a milking/feeding parlour 1 comprising a fencing 2 which confines an animal 3 during its stay in the milking/feeding parlour 1. The milking/feeding parlour 1 is provided with an entrance door 4 and an exit door 5. Further, a feeding trough 6 is provided on the front of the milking/feeding parlour 1. On one side of the milking/feeding parlour 1, a milking robot 7 is mounted on the fencing 2. The milking robot 7 comprises a robot arm 8 with teat cups 9 on its end.

As shown in Figure 2, the robot arm 8 is built up from a first beam-shaped part 10 which is capable of swivelling about a vertical shaft 11, which shaft 11 is connected with a lug 12 disposed on a post 13 of the fencing 2. The robot arm 8 further comprises a second part 14 which is capable of swivelling about a horizontal shaft 15 relatively to the first part 10. The first part 10 is capable of swivelling about the vertical shaft 11 by means of a cylinder 16, one end of which is connected with the lug 12 and the other end with the first part 10 of the robot arm.

The second part 14 of the robot arm is built up from two parts, i.e. a beam 17 and, on the end of the beam 17, a third part 19 of the robot arm 8 capable of pivoting on a vertical shaft 18. The third part 19 of the robot arm is adjustable with respect to the beam 17 by means of a cylinder 20 mounted between the beam 17 and the third part 19. The third part 19 of the robot arm is, on its end, provided with a carrier 21 with the teat cups 9 on it. Furthermore, on the third part 19 of the robot arm there is provided a sensor 22, by means of which the positions of the teats can be determined. In the present exemplary embodiment of the invention, the sensor 22 is of the laser-type.

Between the first part 10 of the robot arm and the second part 14 of the robot arm there is further provided a second horizontal shaft 23. With respect to the first part 10 of the robot arm, the second part 14 of the robot arm is rotatable about the second horizontal shaft 23. Near the second horizontal shaft 23 there are provided adjusting means 24, with the aid of which the second part 14 of the robot arm can be set round the second horizontal shaft 23 with respect to the first part 10 of the robot arm (fine setting).

The hinge-arm construction through which the first part 10 of the robot arm is capable of swivelling relatively to the second part 14 of the robot arm is shown in greater detail in Figure 3. The hinge-arm construction is provided with a locking device 25, by means of which, in the operating position of the robot arm 8, the first part 10 of the robot arm can be locked in relation to the second 14 part of the robot arm. The locking device 25 comprises a lug 26 provided on the first part 10 of the robot arm and a lug 27 provided on the second part 14 of the robot arm. In the first lug 26 there is provided a threaded-end rod 29 rotatable about a horizontal shaft 28, whose other end is passed through a hole in the lug 27. The threaded-end rod 29 is fixedly connected with the lug 27 by means of two nuts 30 and 31.

On the underside of the first beam-shaped part 10 of the robot arm there is provided a stop 32, against which the underside of the second part 14 bears when it has been swung about the horizontal shaft 15 in the direction of arrow A. The stop 32 is arranged at an angle of approximately 95° to the horizontally extending first part 10 of the robot arm.

When maintenance and/or repair work to the second part 14 or the third part 19 of the robot arm 8 has to be done, the maintenance engineer can unlock the locking device 25 by removing the nut 31. The second part 14 of the robot arm 8 can then be swung in the direction of arrow A (Figure 3) until the underside strikes the stop 32. Due to the fact that in this manner the centre of gravity of the second part 14 of the robot arm 8 comes to be to the right of a vertical plane including the centre line of the horizontal hinge shaft 15 (Figure 2), the second part 14 of the robot arm 8 will remain in the upwardly directed position. Thus the maintenance engineer has both his hands free to perform maintenance work on the second part 14 and the third part 19 of the robot arm 8.

It will be obvious that in the upwardly directed position it is also feasible to lock the second part 14 in relation to the first part 10 of the robot arm 8 through locking means (not shown), such as a screwed connection, a clamp fixing, etc.

The invention is not limited to that which has been set forth hereinbefore, but it also applies to that which is represented in the drawings.

## Claims

1. An implement for automatically milking animals, such as cows, using a milking robot (7) comprising a robot arm (8) for automatically connecting teat cups (9) to the teats of the animal to be milked, characterized in that the robot arm (8) is provided with a hinge construction, by means of which at least a part (14) of the robot arm can be swung upwards, which part can be locked in the upwardly directed position through locking means.

2. An implement according to claim 1, characterized in that the hinge construction is provided with a locking device (25), by means of which the swivelling part (14) of the robot arm (8) can be locked in the operating position, while further the swivelling part (14) can be kept in at least one upwardly directed position.

3. An implement according to claim 2, characterized in that the locking device comprises a screwed connection.

4. An implement according to claim 1, 2 or 3, characterized in that the robot arm part (14) bearing the teat cups (9) is capable of being swung into an upwardly directed position.

5. An implement according any one of claims 1 to 4, characterized in that the swivelling part (14) of the robot arm (8) being in an upwardly directed position bears against a stop (32) provided on the other part (10) of the robot arm (8).

6. An implement according to any one of the preceding claims, characterized in that the swivelling part (14) of the robot arm (8) is capable of being swung through an angle of more than 90°, preferably 95°, to the horizontal.

7. An implement according to any one of the preceding claims, characterized in that the swivelling part (14) of the robot arm (8) is capable of rotating about a horizontal shaft (15).

8. An implement according to any one of the preceding claims, characterized in that the swivelling part (14) of the robot arm (8) is L-shaped.

## Patentansprüche

1. Vorrichtung zum automatischen Melken von Tieren, wie z. B. Kühen, unter Verwendung eines Melkroboters (7) mit einem Roboterarm (8) zum automatischen Anschließen von Zitzenbechern (9) an die Zitzen des zu melkenden Tieres,
dadurch gekennzeichnet, daß der Roboterarm (8) ein Gelenkgestänge aufweist, mittels dessen zumindest ein Teil (14) des Roboterarmes hochschwenkbar und in der aufwärts gerichteten Stellung durch Verriegelungsmittel festlegbar ist.

2. Vorrichtung nach Anspruch 1,
dadurch gekennzeichnet, daß das Gelenkgestänge eine Verriegelungsvorrichtung (25) aufweist, mittels der der schwenkbare Teil (14) des Roboterarmes (8) in der Arbeitslage festlegbar ist, wobei der schwenkbare Teil (14) ferner in mindestens einer aufwärts gerichteten Stellung zu halten ist.

3. Vorrichtung nach Anspruch 2,
dadurch gekennzeichnet, daß die Verriegelungsvorrichtung eine Schraubverbindung umfaßt.

4. Vorrichtung nach Anspruch 1, 2 oder 3,
dadurch gekennzeichnet, daß der die Zitzenbecher (9) tragende Roboterarmteil (14) in eine aufwärts gerichtete Stellung schwenkbar ist.

5. Vorrichtung nach einem der Ansprüche 1 bis 4,
dadurch gekennzeichnet, daß der schwenkbare Teil (14) des in aufwärts gerichteter Stellung befindlichen Roboterarmes (8) an einem Anschlag (32) anliegt, der am anderen Teil (10) des Roboterarmes (8) angeordnet ist.

6. Vorrichtung nach einem der vorhergehenden Ansprüche,
dadurch gekennzeichnet, daß der schwenkbare Teil (14) des Roboterarmes (8) über einen Winkel von mehr als 90°, vorzugsweise von 95°, zur Horizontalen schwenkbar ist.

7. Vorrichtung nach einem der vorhergehenden Ansprüche,
dadurch gekennzeichnet, daß der schwenkbare Teil (14) des Roboterarmes (8) um eine horizontale Achse (15) drehbar ist.

8. Vorrichtung nach einem der vorhergehenden Ansprüche,
dadurch gekennzeichnet, daß der schwenkbare Teil (14) des Roboterarmes (8) L-förmig ist.

## Revendications

1. Dispositif de traite automatique d'animaux, tels que des vaches, utilisant un robot de traite (7) comportant un bras de robot (8) pour connecter de manière automatique des gobelets trayeurs (9) aux trayons de l'animal à traire, caractérisé en ce que le bras de robot (8) est muni d'une construction à charnière, par l'intermédiaire de laquelle au moins une partie (14) du bras de robot peut basculer vers le haut, laquelle partie peut être verrouillée dans une position dirigée vers le haut par des moyens de verrouillage.

2. Dispositif selon la revendication 1, caractérisé en ce que la construction à charnière est munie d'un dispositif de verrouillage (25), par l'intermédiaire duquel la partie pivotante (14) du bras de robot (8) peut être verrouillée dans la position de fonctionnement, alors que la partie pivotante (14) peut de plus être maintenue dans au moins une position dirigée vers le haut.

3. Dispositif selon la revendication 2, caractérisé en ce que le dispositif de verrouillage comporte une liaison vissée.

4. Dispositif selon la revendication 1, 2 ou 3, caractérisé en ce que la partie de bras de robot (14) supportant les gobelets trayeurs (9) peut basculer jusqu'à une position dirigée vers le haut.

5. Dispositif selon l'une quelconque des revendications 1 à 4, caractérisé en ce que la partie pivotante (14) du bras de robot (8), lorsqu'elle est dans une position dirigée vers le haut, est en appui sur une butée (32) montée sur l'autre partie (10) du bras de robot (8).

6. Dispositif selon l'une quelconque des revendications précédentes, caractérisé en ce que la partie pivotante (14) du bras de robot (8) peut basculer suivant un angle de plus de 90°, et de préférence 95°, par rapport l'horizontale.

7. Dispositif selon l'une quelconque des revendications précédentes, caractérisé en ce que la partie pivotante (14) du bras de robot (8) peut tourner autour d'un arbre horizontal (15).

8. Dispositif selon l'une quelconque des revendications précédentes, caractérisé en ce que la partie pivotante (14) du bras de robot (8) est en forme de L.
